# DEMANDE DE BREVET EUROPEEN

(11) **EP 3 560 397 A1**
(43) Date de publication de la demande: **30.10.2019**
(21) Numéro de dépôt: 19171207.4
(22) Date de dépôt: 25.04.2019
(51) Int. Cl.: A47J 37/07

(54) **BARBECUE À FOYERS VERTICAUX ET ENCEINTE DE CUISSON À PAROIS**

(30) Priorité: 27.04.2018 FR 1853717
(71) Demandeur: SMOW, 60510 Bresles (FR)
(72) Inventeur: NECER, Nadir, 60700 Pont-Sainte-Maxence (FR)
(74) Mandataire: Bureau Duthoit Legros Associés

(57) **Abrégé**

L'invention est relative à un barbecue (1) comprenant :
- au moins deux foyers verticaux (2), configurés pour recevoir chacun au moins un moyen de chauffage,
- une enceinte de cuisson (3) prévue pour recevoir les aliments à cuire, ladite enceinte de cuisson étant disposée entre les deux foyers verticaux (2),
caractérisé en ce que ladite enceinte de cuisson (3) comprend au moins deux parois latérales (31) de chauffage, imperméables aux gaz, verticales, disposées chacune en vis-à-vis d'un des deux foyers verticaux (2), configurées de sorte que les aliments à l'intérieur de l'enceinte de cuisson sont chauffés indirectement, lesdites parois latérales de chauffage (31) transmettant respectivement la chaleur générée par les moyens de chauffage des foyers verticaux (2) par rayonnement, aux aliments à partir des deux côtés de l'enceinte de cuisson (3).

## Description

La présente invention a pour objet un barbecue.

Le domaine de l'invention est celui des barbecues, destinés à la cuisson des aliments.

De façon bien connue, un barbecue comporte généralement un foyer horizontal, la nourriture étant placée au-dessus de la source de chaleur ou foyer. Une telle source de chaleur comporte habituellement un ou plusieurs éléments chauffants, comme par exemple du charbon de bois incandescent, une résistance électrique, ou du gaz brûlé, ou une combinaison de ces différents éléments chauffants.

Un tel barbecue à foyer horizontal présente généralement l'inconvénient de permettre aux graisses extraites des aliments au cours de leur cuisson d'atteindre les éléments chauffants du barbecue, ce qui peut générer un dépôt de matières toxiques, et notamment cancérigènes, ou encore la formation de flammes qui risquent également de détériorer la nourriture. Par ailleurs, cela peut également générer des fumées toxiques et des odeurs qui peuvent créer des nuisances dans l'environnement du barbecue.

Afin de pallier à ces inconvénients, on connaît par exemple du document WO 2006/056703 A2 un barbecue du type à foyer vertical, à savoir que la source de chaleur est située latéralement aux aliments : les fluides de cuisson tels que graisses et jus ne peuvent pas chuter sur les éléments chauffants.

Le document WO 2006/056703 A2 décrit plus particulièrement un barbecue à double ensemble de foyers verticaux, réglables en largeur, chacun ayant une seule face de cuisson en vis-à-vis des aliments à cuire, lesdits ensembles de foyers comprenant une paroi de protection isolée non directement en contact avec les foyers par circulation d'air. Lesdits foyers verticaux constituent une source de chaleur et reçoivent à cet effet un ou plusieurs moyens de chauffage.

Les foyers verticaux sont prolongés dans leur partie supérieure par une pluralité de volets en matériau réfléchissant, démontables et articulés en plusieurs parties qui quand elles sont dépliées s'étendent respectivement vers l'élément de chauffe opposé de manière à former une voute. De plus, les foyers, à leurs extrémités sont reliés par des volets verticaux en matériau réfléchissants, démontables et articulés en plusieurs parties.

Les barbecues du type à foyer vertical présentent ainsi les avantages suivants :
- ils évitent la création de flammes en ce que les graisses ne s'écoulent pas dans le foyer,
- ils réduisent les risques de carbonisation des viandes.

Néanmoins, et selon les constatations de l'inventeur, lorsque la source de chaleur est du charbon ou du bois un tel barbecue présente toujours l'inconvénient que rien n'isole les aliments des gaz provenant des moyens de chauffage présents dans les foyers verticaux. Ces aliments se retrouvent en contact direct avec les fumées, ou encore les particules générées par ces moyens de chauffage.

Lesdites flammes, fumées ou particules s'avèrent toxiques pour les aliments avec lesquelles elles entrent en contact, ce qui représente un risque pour la santé du consommateur de ces aliments, en particulier en ce que la combustion de bois ou de charbon libère des hydrocarbures polycycliques aromatiques, potentiellement cancérigènes.

L'invention se propose de pallier à cet inconvénient en proposant un barbecue pour lequel aucune fumée issue des éléments chauffants ne va entrer en contact avec les aliments cuits par ledit barbecue, tout en garantissant une cuisson optimale de ces aliments.

D'autres buts et avantages de l'invention apparaîtront au cours de la description qui va suivre qui n'est donnée qu'à titre indicatif et qui n'a pas pour but de la limiter.

Aussi, l'invention concerne un barbecue comprenant :
- au moins deux foyers verticaux, configurés pour recevoir chacun au moins un moyen de chauffage,
- une enceinte de cuisson prévue pour recevoir les aliments à cuire, ladite enceinte de cuisson étant disposée entre les deux foyers verticaux.

Selon l'invention, ladite enceinte de cuisson comprend au moins deux parois latérales de chauffage, imperméables aux gaz, verticales, disposées chacune en vis-à-vis d'un des deux foyers verticaux, configurées de sorte que les aliments à l'intérieur de l'enceinte de cuisson sont chauffés indirectement, lesdites parois latérales de chauffage transmettant respectivement la chaleur générée par les moyens de chauffage des foyers verticaux par rayonnement, aux aliments à partir des deux côtés de l'enceinte de cuisson.

Selon des caractéristiques optionnelles de l'invention, prises seules ou en combinaison:
- les parois latérales de chauffage de ladite enceinte de cuisson sont réalisées en verre résistant à la chaleur, par exemple en vitrocéramique ou en verre borosilicate;
- ladite enceinte de cuisson est de forme sensiblement parallélépipédique comprenant, en plus des deux parois latérales de chauffage, une paroi supérieure, horizontale, voire même une paroi inférieure, horizontale, une paroi avant, verticale, et une paroi arrière, verticale, ladite enceinte de cuisson étant configurée de sorte à confiner la chaleur reçue par l'intermédiaire des deux parois latérales de chauffage;
- l'enceinte de cuisson comprend:
   - un caisson formé par la paroi supérieure, l'éventuelle paroi inférieure, la paroi arrière, et les deux parois latérales de chauffage, avec une ouverture d'accès en façade avant,
   - un système de fermeture/ouverture de ladite ouverture d'accès en façade avant du caisson, comprenant ladite paroi avant de l'enceinte de cuisson, amovible par rapport audit caisson;
- les parois du caisson sont maintenues entre elles par une structure cadre comprenant une pluralité de cornières reliées entre elles, maintenant la paroi supérieure, la paroi arrière, et les deux parois latérales de chauffage;
- le barbecue comprend en outre un support de réception des aliments, interne audit caisson de l'enceinte de cuisson, comportant des moyens de maintien configurés pour assurer le maintien des aliments entre les deux parois latérales de chauffage de ladite enceinte de

cuisson, ledit support de réception des aliments étant un élément tiroir monté mobile en translation selon une direction horizontale afin de permettre son retrait/ insertion dans ledit caisson au travers de l'ouverture d'accès dudit caisson (30) de l'enceinte de cuisson;
- la paroi avant du système de fermeture/ouverture de ladite ouverture d'accès en façade avant du caisson de l'enceinte de cuisson est solidaire du support de réception des aliments, voire même fait partie intégrante de la structure du support de réception des aliments;
- le système de fermeture/ouverture de l'enceinte de cuisson comporte une poignée solidaire de la paroi avant;
- ledit support de réception des aliments comporte une paroi inférieure, horizontale, et une paroi supérieure, horizontale, parallèles entre elles, et une paroi avant, le cas échéant constituée par la paroi avant du système de fermeture/ouverture de ladite ouverture d'accès en façade avant du caisson de l'enceinte de cuisson, et une paroi arrière, verticale, parallèles entre elles et reliées par ladite paroi inférieure et par ladite paroi supérieure;
- les moyens de maintien des aliments comprennent une pluralité de perçages réalisés en vis-à-vis dans chacune de la paroi avant et de la paroi arrière du support de réception des aliments et/ou une pluralité de fentes ménagées sur la paroi supérieure, débouchant latéralement à la paroi supérieure;
- chaque foyer vertical est conformé de sorte à former un récipient pour du combustible, notamment du charbon de bois, avec une paroi latérale de chauffage, verticale, située en vis-à-vis d'une desdites parois latérales de chauffage de ladite enceinte de cuisson, ainsi qu'une paroi latérale de combustion, verticale, opposée à la paroi de chauffage, et une paroi inférieure, horizontale, ledit récipient étant ouvert sur sa face supérieure pour assurer l'alimentation en combustible ;
- la paroi latérale de chauffage d'un foyer vertical comporte une pluralité de premières ouvertures, réparties selon une densité dl, et la paroi latérale de combustion du foyer vertical, disposée opposée à la paroi latérale de chauffage comporte une pluralité de secondes ouvertures, réparties selon une densité d2, telle que d2 est strictement inférieure à d1 ;
- le barbecue comporte un plateau de support, avec une face supérieure, sensiblement plane et des bords relevés , en saillie depuis ladite face supérieure, conformés de sorte à assurer la rétention des résidus de combustibles, et dans lequel les foyers verticaux (2) et l'enceinte de cuisson sont des éléments disposés de façon amovible sur la face supérieure dudit plateau de support ;
- un support à fonction de rehausse, est disposé sur le plateau de support, ladite rehausse étant configurée supérieure ou égale à la hauteur des bords relevés pour assurer le guidage en translation du support de réception des aliments par rapport audit caisson de l'enceinte de cuisson, et de sorte à ce que le support de réception des aliments coulisse au-dessus des bords relevés dudit plateau de support ;
- la dimension en longueur L du plateau est bien supérieure à la somme des épaisseurs des au moins deux foyers, d'une part et de l'enceinte de cuisson reposant sur la face supérieure du foyer, d'autre part, et dans lequel les foyers sont configurés pour glisser suivant la direction longitudinale du plateau, permettant d'augmenter l'intensité de chauffage à l'intérieur de ladite enceinte de cuisson par rapprochement de chacune des parois latérales de chauffage des foyers vers les deux parois latérales de chauffage (31) correspondantes de l'enceinte de cuisson, ou au contraire diminuer l'intensité de chauffage à l'intérieur de ladite enceinte de cuisson par écartement de chacune des parois latérales de chauffage des parois latérales de chauffage correspondantes de l'enceinte de cuisson.

L'invention sera mieux comprise à la lecture de la description qui va suivre accompagnée des figures en annexe, parmi lesquelles :

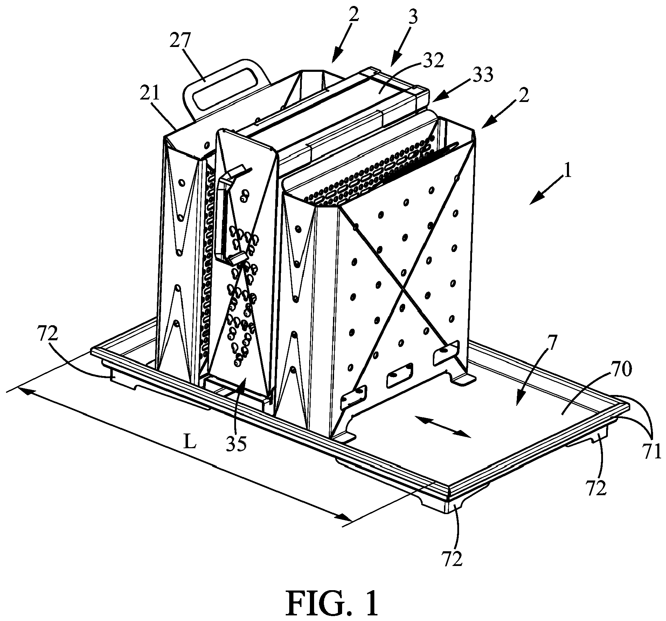

- La figure 1 est une vue en perspective d'un barbecue selon un mode de réalisation conforme à l'invention,

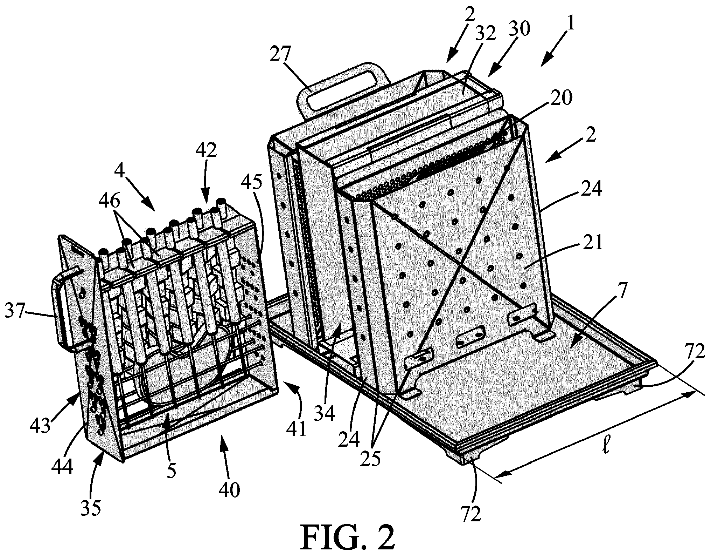

- La figure 2 est une vue en perspective du barbecue de la figure 1, dans lequel le support de réception des aliments est disposé en dehors du caisson de l'enceinte de cuisson,
- La figure 3 est une vue en détail du support de réception des aliments de la figure 1,
- La figure 4 est une vue en coupe de la figure 1 selon un plan vertical, perpendiculaire aux parois latérales de chauffage,
- La figure 5 est une vue de détail d'un des deux foyers verticaux et du caisson de l'enceinte de cuisson, isolés du barbecue de la figure 1,
- La figure 6 est une vue en perspective sous un autre angle des éléments de la figure 5.

L'invention concerne un barbecue 1 comprenant :
- deux foyers verticaux 2, disposés parallèles entre eux, configurés pour recevoir chacun au moins un moyen de chauffage,
- une enceinte de cuisson 3 prévue pour recevoir les aliments 5 à cuire, ladite enceinte de cuisson 3 étant disposée entre les deux foyers verticaux.

Selon l'invention, ladite enceinte de cuisson 3 comprend au moins deux parois latérales de chauffage 31, imperméables aux gaz, verticales, et disposées chacune en vis-à-vis d'un des deux foyers verticaux 2, lesdites parois latérales de chauffage 31 étant configurées pour faire chauffer les aliments 5 à l'intérieur de l'enceinte de cuisson 3 par rayonnement à partir de la chaleur émise par les deux foyers verticaux 2. Les parois latérales de chauffage peuvent être parallèles entre elles pour deux d'entre elles, et selon un mode de réalisation en particulier lorsque les foyers sont au nombre de deux. Selon un mode de réalisation non illustré, on peut envisager que le barbecue comporte un troisième foyer, voire même un quatrième foyer.

Les aliments 5 présents dans ladite enceinte de cuisson 3 se retrouvent donc protégés par l'intermédiaire des parois latérales de chauffage 31, des flammes, des fumées et des particules générées par les moyens de chauffage disposés dans les foyers verticaux, et notamment lorsque les moyens de chauffage comprennent du charbon incandescent, ou du bois.

Les aliments 5 à l'intérieur de l'enceinte de cuisson, disposés entre ces au moins deux parois de chauffages 31 sont chauffés indirectement, lesdites parois latérales de chauffage 31 transmettant respectivement la chaleur générée par les moyens de chauffage des foyers verticaux 2 par rayonnement (rayonnement infra-rouge), aux aliments à partir des deux côtés de l'enceinte de cuisson.

Selon un mode de réalisation, les parois latérales de chauffage 31 de ladite enceinte de cuisson 3, sont réalisées en verre résistant à la chaleur, par exemple en vitrocéramique ou en verre borosilicate.

De tels verres résistant à la chaleur sont notamment particulièrement avantageux en ce qu'ils ne vont pas se détériorer à cause de la chaleur importante transmise par les moyens de chauffage des foyers verticaux 2 tout en transmettant de façon optimale cette chaleur par rayonnement aux aliments 5 positionnés dans ladite enceinte de cuisson 3, afin d'assurer leur cuisson. Ils présentent également l'avantage d'avoir un faible coût de revient.

Le verre borosilicate employé peut avantageusement être celui commercialisé par la société PYREX®.

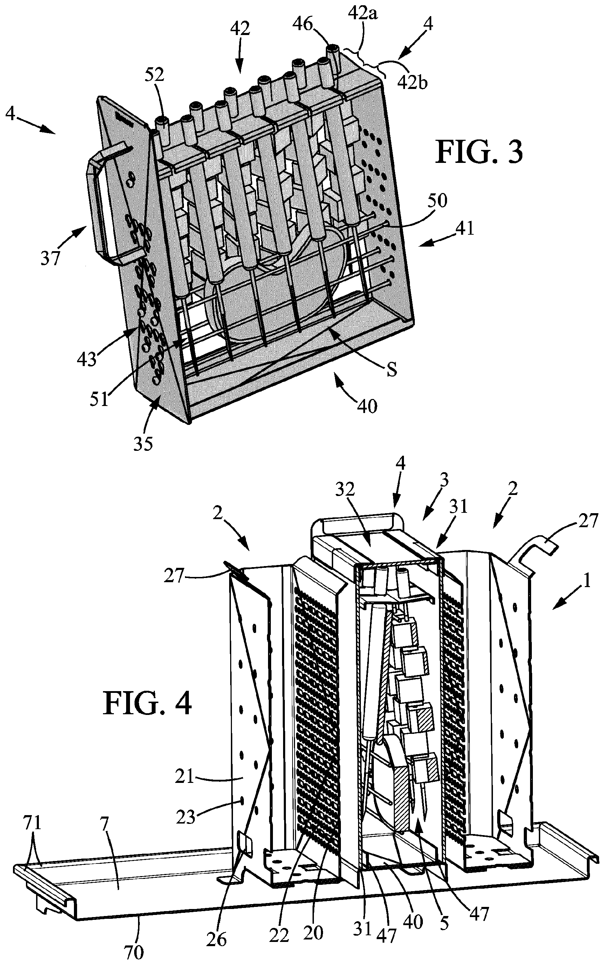

Comme visible sur l'exemple de réalisation des figures 4 à 6, l'épaisseur desdites parois latérales de chauffage 31 peut être comprise entre 3 et 6 mm, afin de garantir une bonne transmission de la chaleur et une certaine solidité à l'enceinte de cuisson 3.

Selon un mode de réalisation, ladite enceinte de cuisson 3 est de forme sensiblement parallélépipédique comprenant, en plus des deux parois latérales de chauffage 31, une paroi supérieure 32, horizontale, voire même une paroi inférieure 38, horizontale, une paroi avant 35, verticale, et une paroi arrière 33, verticale, ladite enceinte de cuisson 3 étant configurée de sorte à confiner la chaleur reçue par l'intermédiaire des deux parois latérales de chauffage 31. Une telle enceinte de cuisson, confinant les aliments, permet de les chauffer rapidement et protège les aliments contre le vent qui retarderait la cuisson.

Grâce à cette disposition avantageuse de l'invention, la chaleur s'échappe moins facilement de l'enceinte de cuisson 3, ce qui permet de réduire les besoins énergétiques du barbecue pour fournir de la chaleur pour la cuisson des aliments, notamment la quantité de charbon à disposer dans les foyers verticaux 2, et garantit une cuisson optimale des aliments 5 dans l'enceinte de cuisson 3.

Selon un mode de réalisation, l'enceinte de cuisson 3 comprend,
- un caisson 30 formé par la paroi supérieure 32, l'éventuelle paroi inférieure 38, la paroi arrière 33, et les deux parois latérales de chauffage 31, avec une ouverture d'accès 34 en façade avant,
- un système de fermeture/ouverture de ladite ouverture d'accès 34 en façade avant du caisson 30, comprenant ladite paroi avant 35 de l'enceinte de cuisson 3 amovible par rapport au caisson 30.

Une poignée 37 solidaire de la paroi avant 35, s'étend à l'extérieur de l'enceinte de cuisson 3, pour faciliter la mise en place de cette paroi avant 35 dans une position où elle obture l'ouverture d'accès lors de la cuisson, vers une position où cette paroi avant 35 est escamotée, libérant l'ouverture d'accès 34.

Selon un mode de réalisation, les parois du caisson sont maintenues entre elles par une structure cadre comprenant une pluralité de cornières 36 reliées entre elles, maintenant la paroi supérieure 32, la paroi arrière 33, et les deux parois latérales de chauffage 31.

Une première cornière 36, supérieure, sensiblement horizontale, joint la paroi supérieure 32, à l'une des parois latérale de chauffage (gauche) et une deuxième cornière supérieure, horizontale et sensiblement parallèle à la première cornière joint la paroi supérieure 32 à l'autre (droite) paroi latérale de chauffage 31.

Une troisième cornière 36, sensiblement verticale joint la paroi latérale 31 (gauche) à la paroi arrière 33, et une quatrième cornière 36 verticale joint l'autre paroi latérale 31 (droite) à la paroi arrière 33.

A ce sujet, la paroi arrière 33 et/ou la paroi supérieure 32, peuvent être également en verre résistant à la chaleur, par exemple en vitrocéramique ou en verre borosilicate.

La paroi supérieure 32, sensiblement horizontale, peut servir de plaque de cuisson comme une pierrade pour terminer la cuisson des aliments, ou pour maintenir au chaud les aliments dans un conteneur posé sur cette dernière.

En partie basse, les parois latérales 31, voire la paroi arrière 33 peuvent être maintenues également par des cornières (non illustrées).

Alternativement, la paroi inférieure 38 de l'enceinte de cuisson 3 peut être en métal, et formée par un support 6 assurant le maintien des parois latérales de chauffage 31, voire même de la paroi arrière 33, par leurs bords inférieurs.

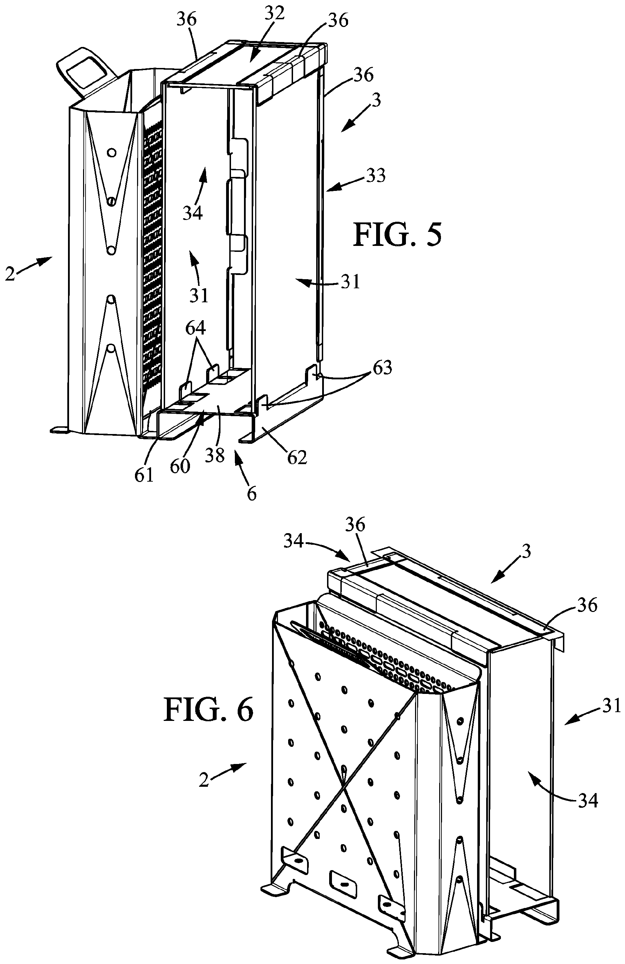

Comme illustré à la figure 5, ce support 6 est formé à partir d'une tôle prédécoupée et pliée pour former :
- un piètement 61, 62, saillant vers la base à partir de la paroi inférieure 38, destiné à reposer sur un appui horizontal, le piètement assurant la rehausse de la paroi inférieure 38,
- des paires d'ailes de maintien intérieures 64, et extérieures 63, saillantes vers le haut, à partir de la paroi inférieure 38, destinées à maintenir les parois latérales de chauffage 31, voire la paroi latérale 33 par leur bord inférieur.

Comme illustré à la figure 5, le piètement est obtenu par pliage des deux extrémités longitudinales de la tôle, afin de former les deux piètements 61, 62, les piètements 61, 62 faisant saillie d'un même côté de la paroi inférieure 38, vers le bas. Les ailes de maintien 63, 64 sont formées par des découpes de la tôle, et leur pliage sensiblement à 90°, lesdites ailes de maintien 63, 64 faisant saillie de l'autre côté de la paroi inférieure 38, par rapport aux piètements 61, 62.

Pour chaque paroi 31 ou 33 à maintenir, à savoir paroi latérale de chauffage 31, gauche (ou droite), voire même paroi arrière 33 ; les ailes intérieure 64 et extérieure 63 de chaque paire sont écartées d'un inter-espace correspondant à l'épaisseur de la paroi latérale à maintenir. Les ailes 63 et 64 assurent le maintien par insertion et emboîtement de la paroi à maintenir entre lesdites ailes intérieure et extérieure d'une même paire.

Le barbecue peut comporter encore un support de réception 4 des aliments, destiné à être interne audit caisson de l'enceinte de cuisson. Ce support de réception 4, comporte des moyens de maintien configurés pour assurer le maintien des aliments entre les deux parois latérales de chauffage 31 de ladite enceinte de cuisson.

Le support de réception 4 des aliments peut être un élément tiroir, à savoir un élément monté mobile en translation selon une direction horizontale afin de permettre son retrait/insertion dans ledit caisson au travers de l'ouverture d'accès 34 dudit caisson de l'enceinte de cuisson 3 essentiellement par coulissement. Cet élément tiroir coulisse par exemple sur la paroi inférieure 38 du caisson 30.

Selon un mode de réalisation illustré, la paroi avant 35 du système de fermeture/ouverture de ladite ouverture d'accès en façade avant du caisson de l'enceinte de cuisson est avantageusement solidaire du support 4 de réception des aliments, voire même fait partie intégrante dudit support de réception 4 des aliments, et comme illustré à titre indicatif à la figure 3.

Cela facilite les opérations manuelles de retrait ou de mise en place : le support de réception 4 des aliments et la paroi avant 35 sont retirés par coulissement de l'ensemble vers l'extérieur (ou mis en place par coulissement de l'ensemble à l'intérieur du caisson).

On remarque que ledit support de réception 4 des aliments peut comporter :
- une paroi inférieure 40, horizontale, et une paroi supérieure 42, horizontale, parallèles entre elles, et
- une paroi avant 43 (le cas échéant constituée par la paroi avant 35 du système de fermeture/ouverture de ladite ouverture d'accès en façade avant du caisson de l'enceinte de cuisson), et une paroi arrière 41, verticale.

La paroi arrière 41 et la paroi avant 43 sont parallèles entre elles et reliées par ladite paroi inférieure 40 et par ladite paroi supérieure 42.

La structure du support de cuisson peut ainsi comprendre :
- une première tôle prédécoupée, formant la paroi avant 43 du support 4, constituée par la paroi avant 35 du système de fermeture/d'ouverture de ladite ouverture d'accès en façade avant du caisson,
- une deuxième tôle prédécoupée et pliée en U, formant respectivement, la paroi supérieure 42, la paroi arrière 41 et la paroi inférieure 40 du support 4.

Les deux extrémités libres de la deuxième tôle pliée en U sont fixées sur la face interne de la première tôle formant paroi avant 43.

On remarque encore la présence des moyens de maintien des aliments comprenant une pluralité de perçages 44,45 réalisés en vis-à-vis dans chacune de la paroi avant 43 et de la paroi arrière 41 du support de réception 4 des aliments et/ou une pluralité de fentes 46 ménagées sur la paroi supérieure 42.

Les aliments 5 peuvent être supportés par des piques 50, par exemple en bois, alors sensiblement horizontaux, qui sont maintenus chacun en enfilant les deux extrémités de la pique respectivement dans deux perçages 44 et 45 en vis-à-vis portés respectivement par la paroi avant 43 et la paroi arrière 45.

Alternativement, ou additionnellement, une pluralité de fentes 46 peuvent s'étendre dans la paroi supérieure 42 du support 4. Chaque fente 46 débouche latéralement à la paroi supérieure 42. En particulier des premières fentes 46 sensiblement parallèles peuvent déboucher latéralement d'un côté de la paroi supérieure 42, et des deuxièmes fentes 46, disposées en quinconce par rapport aux premières fentes peuvent déboucher de l'autre côté de la paroi supérieure 42. Chaque fente 46 permet de suspendre une broche 51, alors sensiblement verticale. La broche 51 est glissée dans la fente 46 de la paroi supérieure 42 et de sorte qu'une partie supérieure élargie de la broche (telle qu'un embout de préhension 52), de dimension supérieure à l'épaisseur de fente reste en appui sur la paroi supérieure 42. Les aliments piqués par la broche sont alors sensiblement disposés entre la paroi supérieure 42 et la paroi inférieure 40 du support 4. Les fentes 46 peuvent se terminer par une ouverture ronde dont le diamètre est supérieur à la largeur de la fente 46. L'embout de préhension peut alors comprendre un ergot, notamment conique, coaxiale à la broche, destiné à se bloquer dans l'ouverture ronde. La paroi supérieure 42 peut être pliée autour d'un axe longitudinal, formant autour de cet axe deux parois 42a et 42b, inclinées l'une par rapport à l'autre, de section en V. Ce pli longitudinal rigidifie la paroi supérieure 42, mais surtout incline les fentes 46 de sorte que les broches 51 sont naturellement contraintes par la gravité en direction du pli longitudinal. Les bords longitudinaux de la paroi supérieure 42 peuvent être courbés, afin d'éviter les risques de coupure.

D'une manière générale, les bords des tôles peuvent être rayonnés, notamment afin d'augmenter la rigidité et de supprimer les arêtes vives et ainsi les risques de coupure associé.

On remarque encore que la paroi inférieure 40 peut former un bac de rétention des fluides de cuisson, tels que graisses et jus. A cet effet, les bords longitudinaux de la section de tôle formant la paroi inférieure 40 sont relevés. Ces bords relevés 47 forment avec la section horizontale de la paroi inférieure 40, ledit bac de rétention. Le bac peut être muni d'une encoche formant un bec verseur.

Chaque foyer vertical 2 peut être conformé de sorte à former un récipient pour du combustible, notamment du charbon de bois, avec une paroi latérale de chauffage 20, verticale, située en vis-à-vis d'une desdites parois latérales de chauffage 31 de ladite enceinte de cuisson, ainsi qu'une paroi latérale de combustion 21, verticale, et une paroi inférieure, horizontale. Chaque foyer vertical 2 est de préférence un élément amovible.

Ce récipient est ouvert sur sa face supérieure pour assurer l'alimentation en combustible. La tôle formant la paroi latérale de chauffage 20 est pourvue de premières ouvertures 22 pour favoriser la transmission de chaleur vers l'enceinte 3 de cuisson. La paroi latérale de combustion 21, opposée à la paroi de chauffage 20 est munie de secondes ouvertures 23 pour favoriser l'entrée d'air et ainsi la combustion du combustible à l'intérieur du récipient. Une poignée 27 peut être prévue à la partie supérieure du récipient pour assurer sa manipulation, par exemple solidaire à l'extrémité de la paroi latérale de combustion 21.

Le pourcentage de vide créé par les premières ouvertures 22 dans la paroi latérale de chauffage 20 est supérieur au pourcentage de vide créé par les secondes ouvertures 23 dans la paroi de combustion 21.

A cet effet, la densité d1 des premières ouvertures 22 peut être supérieure à la densité d2 des secondes ouvertures 23 et comme visible à la figure 4.

Chaque foyer 2 de combustion peut être obtenu au moyen de tôles inox réfractaires prédécoupées et pliées. On remarque que la paroi latérale de combustion 21, plane, opposée à la face de chauffage 20, d'une part, et les flancs latéraux 24, sensiblement à angle droit de la paroi latérale de combustion 21, d'autre part, sont obtenus à partir d'une même tôle, après deux plis à 45° repérés 25

En partie basse de la face de combustion 21 sont prévues de larges ouvertures 26 pour l'insertion d'allumes feux.

Selon un mode de réalisation, le barbecue peut comporter un plateau de support 7, avec une face supérieure 70, sensiblement plane formant le fond du plateau et des bords relevés 71, en saillie depuis ladite face supérieure 70, conformés de sorte à assurer la rétention des résidus de combustibles. Les bords relevés 71 s'étendent de manière continue le long des quatre côtés du plateau. Le fond du plateau peut présenter une ouverture fermée par un obturateur, amovible. Lorsque l'obturateur est retiré, cette ouverture permet l'évacuation des liquides tels que de l'eau de pluie, piégée sur le plateau (non représenté).

Le plateau peut comprendre sur sa surface inférieure des pieds 72 saillants. Le plateau peut être en acier inox et être légèrement flexible de sorte qu'il soit en équilibre sur ses quatre pieds, même lorsque les pieds 72 reposent sur un support présentant un défaut de planéité.

Le support 6 à fonction de rehausse, est disposé sur le fond du plateau de support 7, ladite rehausse étant configurée supérieure ou égale à la hauteur des rebords pour assurer le guidage en translation du support de réception 4 des aliments par rapport audit caisson de l'enceinte de cuisson : on s'assure que le support de réception 4 des aliments coulisse au-dessus des bords relevés 71 dudit plateau de support.

Les deux foyers verticaux 2 et l'enceinte de cuisson 3 sont des éléments disposés de façon amovible sur la face supérieure dudit plateau de support 7.

On remarque encore que :
- la dimension en largeur 1 du plateau peut correspondre sensiblement à la dimension en longueur de chacun des deux foyers 2 et de l'enceinte de cuisson 3, ou être supérieure légèrement à cette dimension,
- la dimension en longueur L du plateau est bien supérieure à la somme des épaisseurs des deux foyers, d'une part et de l'enceinte de cuisson.

Les foyers 2 peuvent ainsi glisser suivant la direction longitudinale du plateau, afin de rapprocher chacune des parois latérales 20 de chauffage des deux foyers 2 vers les parois latérales de chauffage correspondante 31 de l'enceinte de cuisson 3 pour augmenter l'intensité de chauffage, ou au contraire écarter chacune des parois latérales de chauffage 20 des parois latérales de chauffage correspondante 31 de l'enceinte de cuisson 3 pour diminuer l'intensité de chauffage.

La partie libre du plateau 7 peut servir à poser des ustensiles, aromates, mais aussi peut recevoir le support d'aliment 4 lors du retrait après cuisson, ou lors du chargement des aliments.

### NOMENCLATURE

1. Barbecue,
2. Foyers verticaux,
20. Paroi latérale de chauffage,
21. Paroi latérale de combustion,
22. Premières ouvertures (Paroi latérale de chauffage),
23. Secondes ouvertures (Paroi latérale de cuisson),
24, Flancs,
25. Plis à 45°,
26. Larges ouvertures,
27. Poignée,
3. Enceinte de cuisson,
30. Caisson,
31. Parois latérales de chauffage,
32. Paroi supérieure,
33. Paroi arrière,
34. Ouverture d'accès,
35. Paroi avant,
36. Cornières caisson,
37. Poignée,
38. Paroi inférieure,
4. Support d'aliments,
40. Paroi inférieure,
41. Paroi arrière,
42. Paroi supérieure,
43. Paroi avant,
44,45, perçages pour le support de piques,
46, Fentes pour le support de broche,
47. Bord relevés (paroi inférieur) formant bac de rétention des fluides de cuisson,
5. Aliments,
6. Support à fonction de rehausse,
7. Plateau de support,
70. Face supérieure,
71. Bords relevés,
61,62. Piètement,
64. Paires d'ailes de maintien intérieures,
63. Paires d'ailes de maintien extérieures,
50. Piques,
51. Broche,
52. Embout de préhension,
dl, d2. Densité,
72. Pieds Saillants.

## Revendications

1. Barbecue (1) comprenant :
- au moins deux foyers verticaux (2), configurés pour recevoir chacun au moins un moyen de chauffage,
- une enceinte de cuisson (3) prévue pour recevoir les aliments à cuire, ladite enceinte de cuisson étant disposée entre les deux foyers verticaux (2),
**caractérisé en ce que** ladite enceinte de cuisson (3) comprend au moins deux parois latérales (31) de chauffage, imperméables aux gaz, verticales, disposées chacune en vis-à-vis d'un des deux foyers verticaux (2), configurées de sorte que les aliments à l'intérieur de l'enceinte de cuisson sont chauffés indirectement, lesdites parois latérales de chauffage (31) transmettant respectivement la chaleur générée par les moyens de chauffage des foyers verticaux (2) par rayonnement, aux aliments à partir des deux côtés de l'enceinte de cuisson (3).

2. Barbecue selon la revendication 1, dans lequel les parois latérales de chauffage (31) de ladite enceinte de cuisson sont réalisées en verre résistant à la chaleur, par exemple en vitrocéramique ou en verre borosilicate.

3. Barbecue selon la revendication 1 ou 2, dans lequel ladite enceinte de cuisson (3) est de forme sensiblement parallélépipédique comprenant, en plus des deux parois latérales de chauffage (31), une paroi supérieure (32), horizontale, voire même une paroi inférieure, horizontale, une paroi avant, verticale, et une paroi arrière (33), verticale, ladite enceinte de cuisson étant configurée de sorte à confiner la chaleur reçue par l'intermédiaire des deux parois latérales de chauffage (31).

4. Barbecue selon la revendication 3, dans lequel l'enceinte de cuisson (3) comprend :
- un caisson formé par la paroi supérieure (32), l'éventuelle paroi inférieure, la paroi arrière (33), et les deux parois latérales de chauffage (31), avec une ouverture d'accès (34) en façade avant,
- un système de fermeture/ouverture de ladite ouverture d'accès en façade avant du caisson, comprenant ladite paroi avant (35) de l'enceinte de cuisson, amovible par rapport audit caisson (30).

5. Barbecue selon la revendication 4 dans lequel les parois du caisson sont maintenues entre elles par une structure cadre comprenant une pluralité de cornières (36) reliées entre elles, maintenant la paroi supérieure (32), la paroi arrière (33), et les deux parois latérales de chauffage (31).

6. Barbecue selon l'une des revendications 4 ou 5, comprenant en outre un support de réception (4) des aliments, interne audit caisson (30) de l'enceinte de cuisson (3), comportant des moyens de maintien configurés pour assurer le maintien des aliments entre les deux parois latérales de chauffage (31) de ladite enceinte de cuisson, ledit support de réception des aliments étant un élément tiroir monté mobile en translation selon une direction horizontale afin de permettre son retrait/ insertion dans ledit caisson (30) au travers de l'ouverture d'accès (34) dudit caisson (30) de l'enceinte de cuisson (3).

7. Barbecue selon la revendication 6, dans lequel la paroi avant (35) du système de fermeture/ouverture de ladite ouverture d'accès en façade avant du caisson de l'enceinte de cuisson est solidaire du support (4) de réception des aliments, voire même fait partie intégrante de la structure du support de réception (4) des aliments.

8. Barbecue selon la revendication 7, dans lequel le système de fermeture/ouverture de l'enceinte de cuisson comporte une poignée (37) solidaire de la paroi avant (35).

9. Barbecue selon l'une des revendications 6 à 8, dans lequel ledit support de réception (4) des aliments comporte une paroi inférieure (40), horizontale, et une paroi supérieure (42), horizontale, parallèles entre elles, et une paroi avant (43), le cas échéant constituée par la paroi avant (35) du système de fermeture/ouverture de ladite ouverture d'accès en façade avant du caisson de l'enceinte de cuisson, et une paroi arrière (41), verticale, parallèles entre elles et reliées par ladite paroi inférieure (40) et par ladite paroi supérieure (42).

10. Barbecue selon la revendication 9 dans lequel les moyens de maintien des aliments comprennent une pluralité de perçages (44,45) réalisés en vis-à-vis dans chacune de la paroi avant (43) et de la paroi arrière (41) du support de réception (4) des aliments et/ou une pluralité de fentes (46) ménagées sur la paroi supérieure (42), débouchant latéralement à la paroi supérieure (42).

11. Barbecue selon l'une des revendications 1 à 10, dans lequel chaque foyer vertical (2) est conformé de sorte à former un récipient pour du combustible, notamment du charbon de bois, avec une paroi latérale de chauffage (20), verticale, située en vis-à-vis d'une desdites parois latérales de chauffage (31) de ladite enceinte de cuisson (3), ainsi qu'une paroi latérale de combustion (21), verticale, opposée à la paroi de chauffage, et une paroi inférieure, horizontale, ledit récipient étant ouvert sur sa face supérieure pour assurer l'alimentation en combustible.

12. Barbecue selon la revendication 11, dans lequel la paroi latérale de chauffage (20) d'un foyer vertical comporte une pluralité de premières ouvertures (22), réparties selon une densité dl, et la paroi latérale de combustion (21) du foyer vertical, disposée opposée à la paroi latérale de chauffage (20) comporte une pluralité de secondes ouvertures (23), réparties selon une densité d2, telle que d2 est strictement inférieure à d1.

13. Barbecue selon l'une des revendications 1 à 12, comportant un plateau de support (7), avec une face supérieure (70), sensiblement plane et des bords relevés (71), en saillie depuis ladite face supérieure, conformés de sorte à assurer la rétention des résidus de combustibles, et dans lequel les foyers verticaux (2) et l'enceinte de cuisson (3) sont des éléments disposés de façon amovible sur la face supérieure (70) dudit plateau de support (7).

14. Barbecue selon l'une des revendications 6 ou 7 en combinaison avec la revendication 13, dans lequel un support (6) à fonction de rehausse, est disposé sur le plateau de support (7), ladite rehausse étant configurée supérieure ou égale à la hauteur des bords relevés (71) pour assurer le guidage en translation du support de réception (4) des aliments par rapport audit caisson (30) de l'enceinte de cuisson, et de sorte à ce que le support de réception (4) des aliments coulisse au-dessus des bords relevés (71) dudit plateau de support (7).

15. Barbecue selon la revendication 13 ou 14, dans lequel la dimension en longueur L du plateau est bien supérieure à la somme des épaisseurs des deux foyers (2), d'une part et de l'enceinte de cuisson (3) reposant sur la face supérieure du foyer (2), d'autre part, et dans lequel les foyers (2) sont configurés pour glisser suivant la direction longitudinale du plateau (7), permettant d'augmenter l'intensité de chauffage à l'intérieur de ladite enceinte de cuisson (3) par rapprochement de chacune des parois latérales (20) de chauffage des foyers (2) vers les parois latérales de chauffage (31) correspondantes de l'enceinte de cuisson (3), ou au contraire diminuer l'intensité de chauffage à l'intérieur de ladite enceinte de cuisson (3) par écartement de chacune des parois latérales de chauffage (20) des foyers des parois latérales de chauffage (31) correspondantes de l'enceinte de cuisson (3).
